(19) **Europäisches Patentamt / European Patent Office / Office européen des brevets**

(11) **EP 4 041 551 B1**

(12) **FASCICULE DE BREVET EUROPEEN**

(45) Date de publication et mention de la délivrance du brevet:
**28.08.2024 Bulletin 2024/35**

(21) Numéro de dépôt: **20796630.0**

(22) Date de dépôt: **05.10.2020**

(51) Classification Internationale des Brevets (IPC):
*B29C 64/118* (2017.01)   *B33Y 70/10* (2020.01)
*B33Y 10/00* (2015.01)   *B33Y 80/00* (2015.01)
*B22F 1/05* (2022.01)   *B22F 1/054* (2022.01)
*B22F 1/062* (2022.01)   *B22F 10/18* (2021.01)
*B29C 70/62* (2006.01)   *B29C 70/88* (2006.01)
*C08K 9/06* (2006.01)   *C22C 1/04* (2023.01)
*D01F 1/10* (2006.01)   *D01F 6/62* (2006.01)
*B22F 1/102* (2022.01)   *B22F 1/16* (2022.01)

(52) Classification Coopérative des Brevets (CPC):
(C-Sets disponibles)
**B33Y 70/10; B22F 1/05; B22F 1/054; B22F 1/0547;
B22F 1/062; B22F 10/18; B29C 64/118;
B29C 70/62; B29C 70/88; B33Y 10/00;
B33Y 80/00; C08K 9/06; C22C 1/0466; D01F 1/10;
D01F 6/625;** (Cont.)

(86) Numéro de dépôt international:
**PCT/FR2020/051736**

(87) Numéro de publication internationale:
**WO 2021/069821 (15.04.2021 Gazette 2021/15)**

(54) **MATERIAU COMPOSITE POUR IMPRESSION 3D ET PROCEDE D'IMPRESSION 3D**

VERBUNDMATERIAL FÜR 3D-DRUCK UND VERFAHREN ZUM 3D-DRUCKEN

COMPOSITE MATERIAL FOR 3D PRINTING AND 3D PRINTING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2019 FR 1911201**

(43) Date de publication de la demande:
**17.08.2022 Bulletin 2022/33**

(73) Titulaire: **Commissariat à l'énergie atomique et aux énergies alternatives
75015 Paris (FR)**

(72) Inventeur: **SIMONATO, Jean-Pierre
38054 Grenoble Cedex 09 (FR)**

(74) Mandataire: **Brevalex
Tour Trinity
1 B Place de la Défense
92400 Courbevoie (FR)**

(56) Documents cités:
**FR-A1- 3 052 698     US-A1- 2015 129 286
US-A1- 2019 061 236**

EP 4 041 551 B1

(52) Classification Coopérative des Brevets (CPC):
(Cont.)
B22F 1/102; B22F 1/16; C08K 2201/005;
C08K 2201/011; Y02P 10/25

C-Sets
**C08K 9/06, C08L 67/04**

**Description**

DOMAINE TECHNIQUE

La présente invention se rapporte au domaine général de la fabrication additive (impression 3D), en particulier pour fabriquer des objets électriquement isolants et thermiquement conducteurs.

L'invention concerne un procédé de fabrication additive.

L'invention concerne également un matériau composite pour la fabrication additive.

L'invention concerne également un objet 3D imprimé obtenu par un procédé de fabrication additive mettant en oeuvre un tel matériau composite.

L'invention trouve des applications dans de nombreux domaines industriels, et notamment pour la fabrication de dispositifs de dissipation thermique, en particulier pour des dispositifs électriques / électroniques.

ÉTAT DE LA TECHNIQUE ANTÉRIEURE

Les techniques de fabrication additive (aussi appelée impression 3D) permettent de fabriquer des objets tridimensionnels par addition de matière. Les évolutions récentes dans le domaine de l'impression 3D ont fait passer cette technologie du stade expérimental à une industrie florissante offrant des perspectives remarquables.

La fabrication additive présente un intérêt pour la plupart des industries et pour du prototypage facile. En effet, ce type de procédé permet de fabriquer des pièces de formes complexes non accessibles par les techniques usuelles.

Les possibilités offertes par l'impression 3D dépendent de nombreux éléments comme l'utilisation de logiciels spécifiques, la fabrication de machines élaborées ainsi que le développement de nouveaux matériaux aux propriétés améliorées.

En particulier, il dorénavant possible de fabriquer des objets imprimés électriquement conducteurs, à base de poly(téréphthalate de butylène) et de nanotubes de carbones, comme, par exemple, décrit dans le document de Gnanasekaran et al. (« 3D printing of CNT- and graphene-based conductive polymer nanocomposite by fused déposition modeling », Applied Materials Today 9(2017), 21-28),

Le document US 2015/129286 A1 décrit un procédé de fabrication d'un conducteur transparent comprenant : l'application de nanofils métalliques et d'un fluide d'enrobage sur un substrat de telle sorte que les nanofils métalliques soient au moins partiellement enrobés dans une surface du substrat; et l'application d'un traitement sélectif dans l'espace à une première zone de la surface pour former des parties ayant une résistance plus élevée.

La fabrication additive pourrait également présenter un intérêt dans le domaine de l'électronique, pour fabriquer des pièces complexes, thermiquement conductrices et électriquement isolantes, pour éviter des surchauffes locales de composants électriques/électroniques pouvant créer des dommages sérieux voire irréversibles.

Cependant, de façon un peu surprenante, à ce jour, il n'y a pas de procédé de fabrication additive, simple à mettre en oeuvre et permettant de fabriquer de tels objets.

EXPOSÉ DE L'INVENTION

Un but de la présente invention est de proposer un procédé, simple à mettre en oeuvre, permettant de fabriquer des objets imprimés électriquement isolants et thermiquement conducteurs.

Pour cela, la présente invention propose un procédé d'impression 3D comprenant une étape au cours de laquelle un matériau composite est fondu puis solidifié, le matériau composite comprenant une matrice polymérique dans laquelle sont dispersées des particules à structure coeur/coquille, le coeur étant en un élément thermiquement conducteur, la coquille étant en un élément électriquement isolant, les particules ayant un facteur de forme supérieur à 10.

Par thermiquement conducteur, on entend que le matériau composite a une conductivité thermique supérieure à 2 $W \cdot m^{-1} \cdot K^{-1}$ et, de préférence, supérieure à 4 $W \cdot m^{-1} \cdot K^{-1}$

Par électriquement isolant, on entend que le matériau composite a une résistivité électrique supérieure à $1 \times 10^{13}$ ohm.cm et, de préférence supérieure à $1 \times 10^{14}$ ohm.cm et encore plus préférentiellement supérieure à $1 \times 10^{15}$ ohm.cm.

L'invention se distingue fondamentalement de l'art antérieur par l'utilisation d'un matériau composite comprenant des particules à structure coeur/coquille, à fort facteur de forme, dispersées dans une matrice polymérique. La structure coeur/coquille confère des propriétés de conduction thermique élevées, sans conduction électrique significative.

De plus, les particules, ont un fort facteur de forme, supérieur à 10, et de préférence supérieur 20. Cette forme « unidimensionnelle » permet d'avoir un taux de charge réduit, et donc de fabriquer un objet imprimé ayant de bonnes propriétés mécaniques.

Avantageusement, la matrice polymérique est en polycaprolactone (PCL), en acide polylactique (PLA), en acrylonitrile butadiène styrène (ABS), en poly(téréphtalate d'éthylène) (PET), en polyamide (PA), en polyuréthane (PU), en polysiloxane ou en polycarbonate.

Avantageusement, la plus petite dimension des particules est inférieure à 2 $\mu$m, de préférence inférieure à 100 nm.

Avantageusement, la plus grande dimension des particules va de 1 à 1000$\mu$m, de préférence de 2 à 500$\mu$m, et encore plus préférentiellement de 5 à 200$\mu$m.

Avantageusement, le coeur de la particule est métallique. Par métallique, on entend les métaux, les métalloïdes et leurs alliages. De préférence, le coeur est en argent, or, cuivre, platine, nickel, fer et/ou silicium. Le coeur contient au moins 50% massique, de préférence au moins 80% massique, et encore plus préférentiellement au moins 90% massique d'un ou plusieurs de ces éléments.

Selon une première variante de réalisation avantageuse, la coquille est en oxyde métallique, par exemple en silice, en alumine ou en oxyde de titane.

Selon une deuxième variante de réalisation avantageuse, la coquille est en polymère, le polymère étant de préférence choisi parmi une polyoléfine, un polymère fluoré et/ou un polymère thermodurcissable.

Avantageusement, la coquille a une épaisseur allant de 30nm à 1000nm, de préférence de 80nm à 400nm.

Avantageusement, le matériau composite comprend de 0,01 à 40% massique de particules, et de préférence de 0,5 à 15% massique.

Un tel matériau composite est facile à fabriquer puisque les particules coeur/coquille peuvent être facilement incorporées et dispersées dans la matrice polymérique.

Avantageusement, le matériau composite est sous forme de granulés ou de filaments.

Le procédé de fabrication additive est par exemple avec un procédé de modélisation par dépôt de fil en fusion (ou FDM pour « Fused Déposition Modeling », également nommée FFF pour « fused filament fabrication »).

L'invention concerne également un matériau composite pour fabriquer un objet par impression 3D comprenant une matrice polymérique dans laquelle sont dispersées des particules à structure coeur/coquille, le coeur étant en un élément thermiquement conducteur, la coquille étant en un élément électriquement isolant, les particules ayant un facteur de forme supérieur à 10, et de préférence supérieur à 20.

L'invention concerne également un objet imprimé en matériau composite, obtenu par un procédé d'impression 3D tel que défini précédemment, l'objet imprimé comprenant une matrice polymérique dans laquelle sont dispersées des particules à structure coeur/coquille, le coeur étant en un élément thermiquement conducteur, la coquille étant en un élément électriquement isolant, les particules ayant un facteur de forme supérieur à 10, et de préférence supérieur à 20.

Les objets imprimés ainsi obtenus présentent des capacités de dissipation thermique importante tout en étant électriquement isolants. De plus, ils présentent de bonnes propriétés mécaniques.

De tels objets imprimés obtenus sont, avantageusement, intégrés dans des dispositifs électriques/électroniques dont la chaleur produite, par effet Joule, doit être dissipée. De tels objets sont intégrables dans des dispositifs de faibles dimensions.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

**BRÈVE DESCRIPTION DES DESSINS**

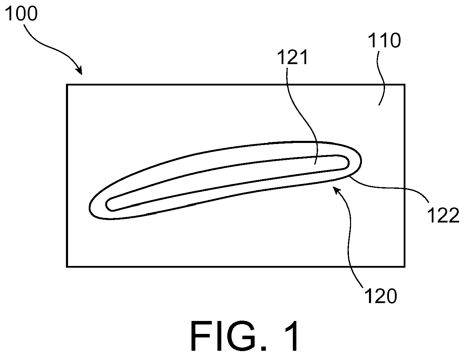

La présente invention sera mieux comprise à la lecture de la description d'exemples de réalisation donnés à titre purement indicatif et nullement limitatif en faisant référence à la figure 1 annexée.

La figure 1 représente schématiquement, en coupe, un matériau composite selon un mode de réalisation particulier de l'invention.

Les différentes parties représentées ne le sont pas nécessairement selon une échelle uniforme, pour rendre la figure plus lisible.

**EXPOSÉ DÉTAILLÉ DE MODES DE RÉALISATION PARTICULIERS**

Bien que cela ne soit aucunement limitatif, l'invention trouve particulièrement des applications dans le domaine de la dissipation thermique, en particulier pour des dispositifs électriques / électroniques.

Le procédé de fabrication d'un objet imprimé, selon l'invention, met en oeuvre un matériau composite 100 comprenant une matrice polymérique 110 dans laquelle sont dispersées des particules 120 à structure coeur 121 / coquille 122.

La matrice polymérique 110 comprend un ou plusieurs polymères. Elle comprend au moins un polymère thermoplastique. A titre illustratif et non limitatif, le ou les polymères sont choisis parmi la polycaprolactone (PCL), l'acide polylactique (PLA), l'acrylonitrile butadiène styrène (ABS), le poly(téréphtalate d'éthylène) (PET), un polyamide (PA), un polyuréthane (PU), un polysiloxane ou un polycarbonate.

De préférence, la matrice polymérique est électriquement isolante.

Les particules 120 sont, avantageusement, dispersées de manière homogène au sein de la matrice polymérique 110.

Les particules 120 présentent une forme dite unidimensionnelle. Il peut s'agir de fils, de bâtonnet, de fibre, etc.

Leur facteur de forme (rapport entre la longueur et la plus grande dimension de la section) est supérieur à 10, et de préférence supérieur à 20.

Les particules 120 ont, de préférence, au moins une dimension inférieure à $2\mu m$, et encore plus préférentiellement inférieure à 100nm. Ici, et par la suite, on définit ces éléments par le terme 'particules', mais, en fonction des dimensions, il peut s'agir de nanoparticules.

Par exemple, les particules 120 ont une longueur allant de 1 à 1000 $\mu$m, de préférence de 2 à 500 $\mu$m, encore plus préférentiellement de 5 à 200 $\mu$m.

Les particules 120 présentent une structure coeur/coquille.

Le coeur 121 peut être de nature métallique et/ou métalloïde. Il peut être en argent, or, cuivre, platine, nickel, fer, silicium ou en un alliage comportant au moins 50% en masse de l'un de ces éléments.

Le coeur des particules est, de préférence, sous la forme de nanofils.

La coquille 122 recouvre intégralement le coeur. De préférence, la coquille a une épaisseur conforme. L'épaisseur de la coquille va de 30 à 1000nm, de préférence de 80 à 400nm.

La coquille 122 est électriquement isolante. Elle peut être en oxyde métallique et/ou polymère. On choisira, avantageusement, l'oxyde métallique parmi la silice, l'alumine et l'oxyde de titane. On choisira, avantageusement, le polymère parmi les polymères de type polyoléfines, polyfluorés et/ou polymères thermodurcissables.

La coquille 122 des nanoparticules 120 et la matrice polymérique 110 sont en des matériaux différents.

Les particules 120 sont électriquement isolantes. Les particules ont une résistivité électrique supérieure à $1.10^{13}$ohm.cm, et de préférence supérieure à $1.10^{14}$ohm.cm. La coquille électriquement isolante assure l'isolation électrique, en formant une couche électriquement isolante autour du coeur. Même lorsque le coeur des particules contient des éléments métalliques, les particules sont globalement électriquement isolantes.

Les particules 120 présentent une conductivité thermique élevée (supérieure à 2W/m.K à 25°C). A titre de comparaison, la conductivité électrique des polymères est généralement de l'ordre de 0,1 - 0,4W/m.K.

De préférence, la conductivité thermique des particules 120 au moins 5 fois supérieure à la conductivité thermique de la matrice polymérique 110.

Les particules 120 représentent de 0,01 à 40% massique du matériau composite, et de préférence de 0,5 à 15% massique.

L'utilisation de telles particules 120 permet d'augmenter sensiblement la conductivité thermique du matériau composite sans modifier la conductivité électrique que l'on souhaite la plus faible possible.

Un tel matériau composite 100 peut être obtenu selon plusieurs protocoles opératoires. De façon non limitative, on peut citer les deux méthodes suivantes :

- dissolution du polymère destiné à former la matrice polymérique 110 dans un solvant, addition des particules 120 coeur 121 / coquille 122, mélange, évaporation du solvant,
- addition des particules 120 coeur 121 / coquille 122 dans le polymère fondu, mélange à chaud et refroidissement.

Afin d'être mis en oeuvre dans un procédé de fabrication additive (impression 3D), le matériau composite 100 est, de préférence, mis sous forme de granulés par découpage/broyage. Le matériau composite 100 peut également être mis sous forme de filaments, directement utilisables pour l'impression.

La fabrication additive, aussi appelée impression 3D, consiste à mettre en forme une pièce en réalisant un empilement de plusieurs couches de matériau déposées successivement les unes sur les autres jusqu'à obtenir la forme finale de la pièce. Il est ainsi possible de produire industriellement des pièces, de forme simple ou complexe, ayant des propriétés mécaniques satisfaisantes.

Lors de la fabrication additive de type FDM, le matériau composite 100 est fondu sous forme de filaments, à travers une tête de dépôt (aussi appelée une buse), puis déposé localement sur les zones d'intérêt d'un substrat, de manière à former des motifs. On dépose ainsi couche par couche des filaments de matériau composite fondu jusqu'à obtenir la forme finale.

Le substrat peut avoir une petite surface ou une grande surface. La surface du substrat peut aller de 5mm$^2$ à plusieurs m$^2$, par exemple 5m$^2$. La surface du substrat peut être plane ou courbe. Le substrat peut être de diverses natures chimiques. Il peut comprendre un ou plusieurs matériaux. Par exemple, il peut être en plastique, en verre, en textile, en silicium et/ou en métal.

L'objet imprimé ainsi obtenu présente une bonne conductivité thermique (supérieure à 2 W·m$^{-1}$·K$^{-1}$) et une forte résistivité (supérieure à 1x $10^{14}$ ohm.cm).

La conductivité thermique des matériaux (massif ou imprimé) peut être déterminée par mesure de la densité, de la diffusivité thermique et de la chaleur spécifique, qui sont reliées par l'équation suivante :

$$\lambda(T) = \alpha(T) \times d(T) \times C_p(T)$$

avec :

$\lambda(T)$ est la conductivité thermique en W·m$^{-1}$·K$^{-1}$
$\lambda(T)$ $\alpha(T)$ est la diffusivité thermique en m$^2$·s$^{-1}$
$\lambda(T)$ $\sigma(T)$ est la masse volumique en kg·m$^{-3}$
$\lambda(T)$ $C_p(T)$ est la chaleur spécifique en J·kg$^{-1}$·K$^{-1}$

Exemples illustratifs et non limitatifs d'un mode de réalisation :

*Exemple 1 : exemple de référence dépourvu de particules coeur /coquille*

Une quantité de 100,0g de polycaprolactone (M=80000g/mol) est dispersée à température ambiante dans 1,5L de dichlorométhane sous vive agitation. Une fois le polymère dissous, le mélange est réparti dans des cristallisoirs et laissé dans une étuve ventilée à 40°C jusqu'à évaporation totale du solvant. Le solide ainsi récupéré est broyé.

Des filaments de 1,75mm de diamètre sont produits au moyen d'une machine Composer 3Devo. Ces filaments sont ensuite utilisés pour fabriquer un objet imprimé par FDM.

La conductivité électrique mesurée sur un filament de 10cm par un multimètre est inférieure à $10^{14}$ $S.cm^{-1}$.

L'objet ainsi imprimé est caractérisé. Il a une conductivité thermique de 0,2 $W \cdot m^{-1} \cdot K^{-1}$.

*Exemple 2 : exemple avec un matériau composite comprenant des particules coeur /coquille :*

Les nanofils d'argent peuvent être synthétisés en mettant en oeuvre une réduction de sels métalliques, par exemple, en réalisant la réduction du nitrate d'argent, par un polyol, typiquement l'éthylène glycol, en présence d'un agent de nucléation (généralement NaCl) et de polyvinylpyrrolidone (PVP).

Les nanofils d'argent sont ensuite purifiés, par exemple avec un procédé de double décantation tel que décrit dans le document FR 3 021 230.

Ces nanofils sont ensuite séparés par centrifugation et placés dans une solution d'ammoniaque dans l'éthanol (6% volumique d'ammoniaque à 28% dans l'eau). Une solution de tétraéthoxysilane à 10% vol dans l'éthanol est ajoutée progressivement pendant 4h sous agitation. Puis la solution est maintenue sous agitation durant 12h. On obtient des particules en un matériau nanocomposite formé de nanofils d'argent recouvert par une coquille de silice. Les particules formées sont alors centrifugées et lavée 2 fois à l'éthanol.

Une quantité de 100,0g de polycaprolactone (M=80000g/mol) est dispersée à température ambiante dans 1,5L de dichlorométhane sous vive agitation. Une fois le polymère dissous, 3,8 g des particules coeur/coquille sont ajoutés, toujours sous vive agitation. Le mélange est ensuite réparti dans des cristallisoirs et laissé dans une étuve ventilée à 40°C jusqu'à évaporation totale du solvant.

Le solide ainsi récupéré est broyé. Des filaments de 1,75 mm de diamètre sont produits au moyen d'une machine Composer 3Devo.

La conductivité électrique mesurée sur un filament de 10cm par un multimètre est inférieure à $10^{14}$ $S.cm^{-1}$.

Ces filaments sont ensuite utilisés pour fabriquer un objet imprimé par FDM.

La conductivité thermique du matériau ainsi imprimé est de 4,2 $W \cdot m^{-1} \cdot K^{-1}$.

**Revendications**

1. Procédé d'impression 3D comprenant une étape au cours de laquelle un matériau composite (100) est fondu puis solidifié, le matériau composite (100) comprenant une matrice polymérique (110) dans laquelle sont dispersées des particules (120) à structure coeur/coquille, le coeur (121) étant en un élément thermiquement conducteur ayant une conductivité thermique supérieure à 2 $W.m^{-1}.K^{-1}$, la coquille (122) étant en un élément électriquement isolant ayant une résistivité électrique supérieure à $1 \times 10^{13}$ ohm.cm, les particules (120) ayant un facteur de forme supérieur à 10, et de préférence supérieur à 20.

2. Procédé selon la revendication précédente, **caractérisé en ce que** la matrice polymérique (110) est en polycaprolactone, en acide polylactique, en acrylonitrile butadiène styrène, en poly(téréphtalate d'éthylène), en polyamide, en polyuréthane, en polysiloxane ou en polycarbonate.

3. Procédé selon l'une des revendications précédentes, **caractérisé en ce que** la plus petite dimension des particules (120) est inférieure à $2 \mu m$, de préférence inférieure à 100nm.

4. Procédé selon l'une quelconque des revendications précédentes, **caractérisé en ce que** le coeur (121) de la nanoparticule (120) est métallique, et de préférence en argent, or, cuivre, platine, nickel, fer, et/ou silicium.

5. Procédé selon l'une quelconque des revendications 1 à 4, **caractérisé en ce que** la coquille (122) est en oxyde métallique, par exemple en silice, en alumine ou en oxyde de titane.

6. Procédé selon l'une quelconque des revendications 1 à 4, **caractérisé en ce que** la coquille (122) est en polymère, le polymère étant de préférence choisi parmi une polyoléfine, un polymère fluoré et/ou un polymère thermodurcissable.

7. Procédé selon l'une quelconque des revendications précédentes, **caractérisé en ce que** la coquille (122) a une épaisseur allant de 30nm à 1000nm, de préférence de 80nm à 400nm.

8. Procédé selon l'une quelconque des revendications précédentes, **caractérisé en ce que** le matériau composite (100) comprend de 0,01 à 40% massique de particules (120), et de préférence de 0,5 à 15% massique.

9. Matériau composite (100) pour fabriquer un objet par impression 3D comprenant une matrice polymérique (110) dans laquelle sont dispersées des particules (120) à structure coeur/coquille, le coeur (121) étant en un élément thermiquement conducteur ayant une conductivité thermique supérieure à 2 $W.m^{-1}.K^{-1}$, la coquille (122) étant en un élément électriquement isolant ayant une résistivité électrique supérieure à $1 \times 10^{13}$ ohm.cm, les particules (120) ayant un facteur de forme supérieur à 10, et de préférence supérieur à 20.

10. Objet imprimé en matériau composite (100), obtenu par impression 3D, comprenant une matrice polymérique (110) dans laquelle sont dispersées des particules (120) à structure coeur/coquille, le coeur (121) étant en un élément thermiquement conducteur ayant une conductivité thermique supérieure à 2 W.m$^{-1}$.K$^{-1}$, la coquille (122) étant en un élément électriquement isolant ayant une résistivité électrique supérieure à $1 \times 10^{13}$ ohm.cm, les particules (120) ayant un facteur de forme supérieur à 10, et de préférence supérieur à 20.

**Patentansprüche**

1. 3D-Druckverfahren, das einen Schritt umfasst, in dem ein Verbundmaterial (100) geschmolzen und dann verfestigt wird, wobei das Verbundmaterial (100) eine Polymermatrix (110) umfasst, in der Partikel (120) mit einer Kern-/Schale-Struktur dispergiert sind, wobei der Kern (121) aus einem wärmeleitenden Element besteht, das eine Wärmeleitfähigkeit von mehr als 2 W.m$^{-1}$.K$^{-1}$ aufweist, wobei die Schale (122) aus einem elektrisch isolierenden Element besteht, das einen spezifischen elektrischen Widerstand von mehr als $1 \times 10^{13}$ ohm.cm aufweist, wobei die Partikel (120) einen Formfaktor von mehr als 10 und vorzugsweise mehr als 20 aufweisen.

2. Verfahren nach dem vorhergehenden Anspruch, **dadurch gekennzeichnet, dass** die Polymermatrix (110) aus Polycaprolacton, Polymilchsäure, Acrylnitril-Butadien-Styrol, Poly(ethylenterephthalat), Polyamid, Polyurethan, Polysiloxan oder Polycarbonat besteht.

3. Verfahren nach einem der vorhergehenden Ansprüche, **dadurch gekennzeichnet, dass** die kleinste Abmessung der Partikel (120) weniger als 2 $\mu$m, vorzugsweise weniger als 100 nm, beträgt.

4. Verfahren nach einem der vorhergehenden Ansprüche, **dadurch gekennzeichnet, dass** der Kern (121) des Nanopartikels (120) metallisch ist und vorzugsweise aus Silber, Gold, Kupfer, Platin, Nickel, Eisen und/oder Silizium besteht.

5. Verfahren nach einem der Ansprüche 1 bis 4, **dadurch gekennzeichnet, dass** die Schale (122) aus Metalloxid, zum Beispiel Siliziumoxid, Aluminiumoxid oder Titanoxid, besteht.

6. Verfahren nach einem der Ansprüche 1 bis 4, **dadurch gekennzeichnet, dass** die Schale (122) aus Polymer besteht, wobei das Polymer vorzugsweise aus einem Polyolefin, einem Fluorpolymer und/oder einem duroplastischen Polymer ausgewählt wird.

7. Verfahren nach einem der vorhergehenden Ansprüche, **dadurch gekennzeichnet, dass** die Schale (122) eine Dicke im Bereich von 30 nm bis 1000 nm, vorzugsweise von 80 nm bis 400 nm, aufweist.

8. Verfahren nach einem der vorhergehenden Ansprüche, **dadurch gekennzeichnet, dass** das Verbundmaterial (100) 0,01 bis 40 Massen-% an Partikeln (120) und vorzugsweise 0,5 bis 15 Massen-% umfasst.

9. Verbundmaterial (100) zum Herstellen eines Gegenstands durch 3D-Druck, umfassend eine Polymermatrix (110), in der Partikel (120) mit einer Kern-/Schale-Struktur dispergiert sind, wobei der Kern (121) aus einem wärmeleitenden Element besteht, das eine Wärmeleitfähigkeit von mehr als 2 W.m$^{-1}$.K$^{-1}$ aufweist, wobei die Schale (122) aus einem elektrisch isolierenden Element besteht, das einen spezifischen elektrischen Widerstand von mehr als $1 \times 10^{13}$ ohm.cm aufweist, wobei die Partikel (120) einen Formfaktor von mehr als 10 und vorzugsweise mehr als 20 aufweisen.

10. Gedruckter Gegenstand aus Verbundmaterial (100), der durch 3D-Druck erhalten wird, umfassend eine Polymermatrix (110), in der Partikel (120) mit einer Kern-/Schale-Struktur dispergiert sind, wobei der Kern (121) aus einem wärmeleitenden Element besteht, das eine Wärmeleitfähigkeit von mehr als 2 W.m$^{-1}$.K$^{-1}$ aufweist, wobei die Schale (122) aus einem elektrisch isolierenden Element besteht, das einen spezifischen elektrischen Widerstand von mehr als $1 \times 10^{13}$ ohm.cm aufweist, wobei die Partikel (120) einen Formfaktor von mehr als 10 und vorzugsweise mehr als 20 aufweisen.

**Claims**

1. A 3D printing method comprising a step during which a composite material (100) is melted then solidified, the composite material (100) comprising a polymer matrix (110) wherein particles (120) with a core/shell structure are dispersed, the core (121) being made of a thermally conductive element having a thermal conductivity greater than 2 W.m$^{-1}$.K$^{-1}$, the shell (122) being made of an electrically insulating element having an electrical resistivity greater than $1 \times 10^{13}$ ohm.cm, the particles (120) having a form factor greater than 10, and preferably greater than 20.

2. The method according to the preceding claim, **characterised in that** the polymer matrix (110) is made of polycaprolactone, polylactic acid, acrylonitrile butadiene styrene, polyethylene terephthalate), polyamide, polyurethane, polysiloxane or polycarbonate.

3. The method according to one of the preceding claims, **characterised in that** the smallest dimension of the particles (120) is less than 2 $\mu$m, preferably less than 100 nm.

4. The method according to any one of the preceding claims, **characterised in that** the core (121) of the nanoparticle (120) is metallic, and preferably made of silver, gold, copper, platinum, nickel, iron, and/or silicon.

5. The method according to any one of claims 1 to 4, **characterised in that** the shell (122) is made of metal oxide, for example silica, alumina or titanium oxide.

6. The method according to any one of claims 1 to 4, **characterised in that** the shell (122) is made of polymer, the polymer being preferably selected from a polyolefin, a fluoropolymer and/or a thermosetting polymer.

7. The method according to any one of the preceding claims, **characterised in that** the shell (122) has a thickness ranging from 30 nm to 1000 nm, preferably from 80 nm to 400 nm.

8. The method according to any one of the preceding claims, **characterised in that** the composite material (100) comprises from 0.01 to 40% by weight of particles (120), and preferably from 0.5 to 15% by weight.

9. A composite material (100) for manufacturing an object by 3D printing comprising a polymer matrix (110) wherein particles (120) with a core/shell structure are dispersed, the core (121) being made of a thermally conductive element having a thermal conductivity greater than 2 $W.m^{-1}.K^{-1}$, the shell (122) being made of an electrically insulating element having an electrical resistivity greater than $1\times10^{13}$ ohm.cm, the particles (120) having a form factor greater than 10, and preferably greater than 20.

10. A printed object made of composite material (100), obtained by 3D printing, comprising a polymer matrix (110) wherein particles (120) with a core/shell structure are dispersed, the core (121) being made of a thermally conductive element having a thermal conductivity greater than 2 $W.m^{-1}.K^{-1}$, the shell (122) being made of an electrically insulating element having an electrical resistivity greater than $1\times10^{13}$ ohm.cm, the particles (120) having a form factor greater than 10, and preferably greater than 20.

FIG. 1

**RÉFÉRENCES CITÉES DANS LA DESCRIPTION**

**Documents brevets cités dans la description**

- US 2015129286 A1

- FR 3021230

**Littérature non-brevet citée dans la description**

- **GNANASEKARAN et al.** 3D printing of CNT- and graphene-based conductive polymer nanocomposite by fused déposition modeling. *Applied Materials Today,* 2017, vol. 9, 21-28